# DEMANDE DE BREVET EUROPEEN

(11) **EP 3 392 521 A1**
(43) Date de publication de la demande: **24.10.2018**
(21) Numéro de dépôt: 18167978.8
(22) Date de dépôt: 18.04.2018
(51) Int. Cl.: F16F 7/12, B62D 21/15, B60R 19/34

(54) **ORGANE D ABSORPTION DE CHOC, DISPOSITIF D'ABSORPTION DE CHOC, SYSTÈME D'ABSORPTION DE CHOC ET ENSEMBLE LES COMPRENANT**

(30) Priorité: 20.04.2017 FR 1753452
(71) Demandeur: Bee Bee Automotive, 88160 Ramonchamp (FR)
(72) Inventeur: LECOMTE, Michel, 72230 MULSANNE (FR); DULUARD, Alain, 72000 LE MANS (FR)
(74) Mandataire: Cabinet Chaillot

(57) **Abrégé**

La présente invention a pour objet un organe d'absorption de choc comprenant un profilé guidant (5a2 ; 5b2 ; 9a ; 9b), un profilé guidé (6a ; 6b ; 10a ; 10b) apte à coulisser sur le profilé guidant, caractérisé par le fait que le profilé guidé est fixé au profilé guidant par des moyens de fixation (14), le profilé guidé faisant saillie du profilé guidant par une extrémité libre d'absorption de choc, les moyens de fixation (14) étant positionnés sur les profilés guidé et guidant selon au moins une ligne de déchirement s'étendant selon la direction longitudinale commune des profilés, de telle sorte que, pour chaque ligne de déchirement, l'un du profilé guidant et du profilé guidé comprend une surface de moindre résistance au cisaillement (19) s'étendant selon la direction longitudinale des profilés, la surface de moindre résistance au cisaillement (19) ayant une résistance au cisaillement inférieure à celle des autres surfaces du profilé qui ne sont pas sur la ligne de déchirement et étant configurée pour se déchirer selon la direction longitudinale des profilés sous l'action des moyens de fixation (14) lorsqu'une force supérieure à un seuil s'exerce sur l'extrémité d'absorption de choc du profilé guidé.

## Description

La présente invention concerne le domaine des structures à déformation en cas d'accident d'un véhicule, et porte plus particulièrement sur un organe, un dispositif et un système d'absorption de choc, et sur un ensemble d'absorption de choc les comprenant.

Un dispositif d'absorption de chocs pour véhicule est classiquement constitué d'une poutre transversale fixée à deux profilés déformables en compression.

On connaît des dispositifs d'absorption de choc formés par des profilés structuraux longitudinaux, des profilés déformables, des moyens de fixation des profilés déformables aux profilés structuraux correspondants et une poutre transversale galbée fixée aux extrémités avant des profilés déformables. Un tel dispositif d'absorption de choc est décrit dans le brevet français FR3019516.

Dans un tel dispositif d'absorption de choc, les moyens de fixation d'un des profilés déformables au profilé structural correspondant sont configurés pour permettre un déplacement transversal vers l'extérieur de l'extrémité arrière dudit profilé déformable par rapport au profilé structural, en cas d'impact sur la poutre galbée, de manière à engendrer une déformation latérale, vers l'extérieur, de l'extrémité avant du profilé structural correspondant.

On connaît également des dispositifs d'absorption de choc pour véhicule formés par un élément d'arbre fixé sur un pare-chocs et maintenus dans un manchon fixé par un élément de fixation monté sur le châssis d'un véhicule. La combinaison du manchon et de l'arbre ayant des propriétés atténuant l'impact de la collision par le développement d'une force de résistance par le télescopage de l'arbre dans le manchon. Il se produit sur l'élément d'arbre une découpe mécanique et une déformation du matériau de surface sur l'élément d'arbre dans le sens longitudinal, en raison du fait que le matériau de surface est forcé contre des bords coupants disposés sur l'élément de manchon. En cas de collision, les bords latéraux du manchon sont découpés, permettant de transformer la force du choc du véhicule en une force de cisaillement. Un tel dispositif d'absorption de choc est décrit dans le brevet américain US3779591.

Toutefois, ces dispositifs d'absorption de choc connus se révèlent peu pratiques à utiliser, fastidieux à monter et nécessitent un usinage complexe et coûteux.

Il existe donc un besoin pour une structure à déformation en cas d'accident pratique à utiliser, facile à monter et moins coûteuse.

La présente invention a donc pour objet un organe d'absorption de choc comprenant un profilé guidant, un profilé guidé apte à coulisser sur le profilé guidant, le profilé guidant portant des moyens de guidage pour amener le profilé guidé à coulisser par rapport au profilé guidant selon leur direction longitudinale commune, caractérisé par le fait que le profilé guidé est fixé au profilé guidant par des moyens de fixation, le profilé guidé faisant saillie du profilé guidant par une extrémité libre d'absorption de choc, les moyens de fixation étant positionnés sur les profilés guidé et guidant selon au moins une ligne de déchirement s'étendant selon la direction longitudinale commune des profilés, de telle sorte que, pour chaque ligne de déchirement, l'un du profilé guidant et du profilé guidé comprend une surface de moindre résistance au cisaillement s'étendant selon la direction longitudinale des profilés, la surface de moindre résistance au cisaillement ayant une résistance au cisaillement inférieure à celle des autres surfaces du profilé qui ne sont pas sur la ligne de déchirement et étant configurée pour se déchirer selon la direction longitudinale des profilés sous l'action des moyens de fixation lorsqu'une force supérieure à un seuil s'exerce sur l'extrémité d'absorption de choc du profilé guidé.

Les moyens de guidage du profilé guidé dans le profilé guidant peuvent être multiples : le profilé guidant peut être creux pour que le profilé guidé coulisse dans celui-ci, ou le profilé guidant peut porter des nervures, respectivement des encoches longitudinales, le profilé guidé portant des encoches longitudinales dans lesquelles coulissent les nervures du profilé guidant, respectivement des nervures qui coulissent dans les encoches longitudinales du profilé guidant. Le profilé guidant peut également porter des rails enserrant le profilé guidé afin de lui permettre de coulisser par rapport au profilé guidant. Tout moyen de guidage du profilé guidé dans le profilé guidant, permettant au profilé guidé de coulisser par rapport au profilé guidant selon leur direction longitudinale commune, est envisagé dans le cadre de la présente invention.

Le profilé guidé et le profilé guidant ne sont ainsi fixés entre eux que par l'intermédiaire des moyens de fixation situés sur la ou les lignes de déchirement.

Selon un mode de réalisation particulier, chaque surface de moindre résistance au cisaillement est portée par l'un du profilé guidant et du profilé guidé, l'autre du profilé guidant et du profilé guidé présentant en regard, selon chaque ligne de déchirement, une surface renforcée, de résistance au cisaillement supérieure à la résistance au cisaillement des autres surfaces de ce profilé qui ne sont pas sur la ligne de déchirement.

Ainsi, le cisaillement selon la ligne de déchirement est davantage favorisé, les moyens de fixation ayant moins tendance à se désolidariser du profilé ne portant pas les surfaces de moindre résistance selon la ligne de déchirement, du fait du renfort de la partie en regard selon la ligne de déchirement sur le profilé ne portant pas les surfaces de moindre résistance.

Selon un mode de réalisation particulier, l'un du profilé guidant et du profilé guidé porte les surfaces de moindre résistance au cisaillement selon chacune des lignes de déchirement.

Ainsi, la fabrication est facilitée par disposition de chaque surface de moindre résistance selon la ou les lignes de déchirement sur un seul et même profilé, de préférence le profilé guidé.

Selon un mode de réalisation particulier, l'un du profilé guidant et du profilé guidé porte les surfaces de moindre résistance au cisaillement selon chacune des lignes de déchirement, l'autre du profilé guidant et du profilé guidé présentant en regard, selon chaque ligne de déchirement, une surface renforcée, de résistance au cisaillement supérieure à la résistance au cisaillement des autres surfaces de ce profilé qui ne sont pas sur la ligne de déchirement.

Selon un mode de réalisation particulier, les moyens de fixation sont choisis parmi des vis, des boulons traversants, des goujons, des rivets, des agrafes. L'invention n'est toutefois pas limitée à cet égard et tout moyen de fixation des profilés entre eux, permettant une rupture au-delà d'un seuil de force appliqué sur l'extrémité d'absorption de choc du profilé guidé selon laquelle les moyens de fixation sont aptes à cisailler la ou les surfaces de moindre résistance selon la ligne de déchirement, sont envisagés selon la présente invention.

Selon un mode de réalisation particulier, les surfaces de moindre résistance au cisaillement sont constituées par des surfaces de moindre épaisseur par rapport aux surfaces qui ne sont pas situées sur les lignes de déchirement.

Selon un mode de réalisation particulier, les surfaces renforcées sont constituées par des surfaces de plus forte épaisseur.

Selon un mode de réalisation particulier, les surfaces de moindre épaisseur sont constituées par des creusures. Ces creusures présentent avantageusement une épaisseur moindre que l'épaisseur du reste du profilé.

Selon un mode de réalisation particulier, les surfaces renforcées sont constituées par des bourrelets de forme complémentaire aux creusures des zones de moindre épaisseur du profilé en regard.

Selon un mode de réalisation particulier, le profilé guidé et le profilé guidant ont une forme en coupe transversale choisie parmi un carré, un rectangle, un ovale, un cercle, une forme en U avec un retour en équerre des branches du U l'une vers l'autre.

Selon un mode de réalisation particulier, le profilé guidé et le profilé guidant sont constitués d'un matériau choisi parmi un métal, une matière plastique, un matériau composite.

Selon un mode de réalisation particulier, le profilé guidé et le profilé guidant sont constitués du même matériau. Ils peuvent également être constitués de matériaux différents dans le cadre de la présente invention.

Selon un mode de réalisation particulier, le profilé guidant et le profilé guidé sont creux, le profilé guidé coulissant dans le profilé guidant, le profil interne du profilé guidant constituant les moyens de guidage. On obtient ainsi une structure télescopique rigide et peu encombrante, garantissant le guidage du profilé guidé dans le profilé guidant. De préférence, le jeu entre les deux profilés sera minimal, permettant ainsi d'absorber une partie du choc par dissipation par frottement entre les deux profilés.

L'invention a également pour objet un dispositif d'absorption de choc caractérisé par le fait qu'il comprend un organe d'absorption de choc tel que défini ci-dessus, sur l'extrémité d'absorption de choc duquel est monté un tube préformé d'absorption par écrasement en spires dont l'extrémité libre constitue l'extrémité d'absorption de choc du dispositif, la résistance au choc du tube préformé d'absorption par écrasement en spires étant inférieure à celle de l'organe d'absorption de choc.

Le tube préformé d'absorption par écrasement en spires est un élément de déformation tubulaire configuré pour être comprimé de manière axiale en une forme de soufflet afin d'absorber l'énergie d'un impact sous la déformation par écrasement de celui-ci par une traverse.

L'invention a également pour objet un système d'absorption de choc, caractérisé par le fait qu'il comprend un châssis solidarisant un longeron primaire et un longeron secondaire, le longeron primaire étant en saillie du longeron secondaire suivant la direction longitudinale commune des longerons et parallèle à celui-ci, de telle sorte que l'extrémité libre du longeron primaire est en saillie de l'extrémité libre du longeron secondaire, chaque longeron étant constitué par un organe d'absorption de choc tel que défini ci-dessus.

L'invention a également pour objet un système d'absorption de choc, caractérisé par le fait qu'il comprend un châssis solidarisant un longeron primaire et un longeron secondaire, le longeron primaire étant en saillie du longeron secondaire suivant la direction longitudinale commune des longerons et parallèle à celui-ci, de telle sorte que l'extrémité libre du longeron primaire est en saillie de l'extrémité libre du longeron secondaire, le longeron primaire étant constitué par un dispositif d'absorption de choc tel que défini ci-dessus et le longeron secondaire étant constitué par un organe d'absorption de choc tel que défini ci-dessus.

L'invention a également pour objet un ensemble d'absorption de choc, caractérisé par le fait qu'il comprend plusieurs systèmes d'absorption de choc tels que définis ci-dessus solidarisés entre eux, les extrémités d'absorption de choc de chacun des longerons primaires appartenant à un même plan primaire, les extrémités d'absorption de choc de chacun des longerons secondaires appartenant à un même plan secondaire, les extrémités d'absorption de choc dans un même plan étant facultativement solidarisées entre elles.

Pour mieux illustrer l'objet de la présente invention, on va en décrire ci-après, à titre illustratif et non limitatif, plusieurs modes de réalisation particuliers avec référence aux dessins annexés.

Sur ces dessins :
- la Figure 1 est une vue en perspective d'un ensemble d'absorption de choc selon un mode de réalisation de la présente invention ;
- la Figure 2 est une vue de côté de l'ensemble d'absorption de choc de la Figure 1 ;
- la Figure 3 est une vue de dessus partielle de l'ensemble d'absorption de choc de la Figure 1 ;
- la Figure 4 est une vue de côté avec arrachement partiel d'un dispositif d'absorption de choc selon un mode de réalisation de la présente invention ;
- la Figure 4a est une vue en coupe selon A-A de la Figure 4 du dispositif d'absorption de choc de la Figure 4 ;
- la Figure 4b est une vue en coupe selon B-B de la Figure 4 du dispositif d'absorption de choc de la Figure 4 ;
- la Figure 4c est une vue en coupe selon C-C de la Figure 4 du dispositif d'absorption de choc de la Figure 4 ;
- la Figure 4d est une vue en coupe selon D-D de la Figure 4 du dispositif d'absorption de choc de la Figure 4 ;
- la Figure 4e est une vue en coupe selon E-E de la Figure 4 du dispositif d'absorption de choc de la Figure 4 ; et
- la Figure 4f est une vue en coupe selon F-F de la Figure 4 du dispositif d'absorption de choc de la Figure 4.

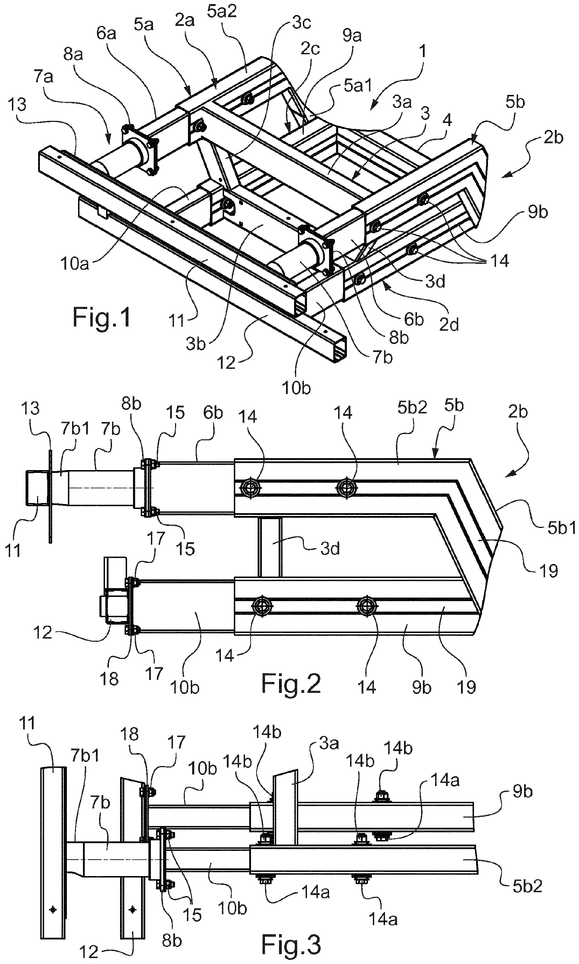

Si l'on se réfère aux Figures 1 à 3, on peut voir que l'on a représenté un ensemble d'absorption de choc 1 selon un mode de réalisation de la présente invention.

L'ensemble d'absorption de choc 1 comprend deux systèmes d'absorption de choc 2a, 2b, parallèles, reliés par un pont 3 et une traverse 4.

Chaque système d'absorption de choc, respectivement 2a, 2b, comprend un dispositif d'absorption de choc supérieur, respectivement 5a, 5b, et un dispositif d'absorption de choc inférieur, respectivement 2c, 2d.

Les dispositif d'absorption de choc supérieurs, respectivement 5a, 5b, sont décalés vers l'extérieur et vers le haut par rapport au plan formé par les dispositif d'absorption de choc inférieurs, respectivement 2c, 2d, le pont 3 comprenant quatre entretoises, 3a, 3b, 3c, 3d formant un parallélogramme isocèle, l'entretoise formant la grande base 3a reliant les deux dispositifs d'absorption de choc supérieurs 5a, 5b, l'entretoise formant la petite base 3b reliant les dispositifs d'absorption de choc inférieurs 2c, 2d, les entretoises formant les côtés du parallélogramme 3c et 3d reliant un dispositif d'absorption de choc supérieur, respectivement 5a, 5b, à un dispositif d'absorption de choc inférieur, respectivement 2c, 2d.

La traverse 4 relie quant à elle les parties arrière des dispositifs d'absorption de choc inférieurs 2c, 2d, pour finir de solidariser l'ensemble.

Le système d'absorption de choc 2a comprend le dispositif d'absorption de choc supérieur 5a et le dispositif d'absorption de choc inférieur 2c.

Le dispositif d'absorption de choc supérieur 5a comprend, depuis l'arrière de l'ensemble d'absorption de choc 1 du côté gauche de la Figure 1 vers l'avant du côté gauche de la Figure 1, une partie inclinée montante 5a1 montant du niveau du dispositif d'absorption de choc inférieur 2c vers la partie horizontale 5a2 du dispositif d'absorption de choc supérieur 5a, formant longeron.

De manière générale dans la présente description, les qualificatifs avant, arrière, droit(e), gauche, aval, amont seront définis par rapport aux côtés avant et arrière de l'ensemble d'absorption de choc 1 sur la Figure 1.

La partie horizontale 5a2 est un profilé creux, comme décrit plus en détail ci-après, dont fait saillie un profilé 6a, de section ayant la même forme que la section de la partie horizontale 5a2 mais de plus petites dimensions, afin que le profilé 6a soit apte à coulisser dans la partie horizontale 5a2.

Une plaque carrée 8a est fixée par des vis 15 à l'extrémité avant du profilé 6a, un tube 7a préformé d'absorption par écrasement en spires étant fixé en aval de la plaque 8a. Il est bien entendu que la forme de la plaque 8a n'est pas limitée à la forme spécifique représentée sur les Figures d'un mode de réalisation particulier, les parties 6a et 7a pouvant être autrement raccordées, par exemple soudées.

L'extrémité avant du tube 7a constitue l'extrémité d'absorption de choc du dispositif d'absorption de choc supérieur 5a, auquel est fixée dans le mode de réalisation représenté une barre 11.

On peut voir que le profilé 6a est fixé à la partie horizontale 5a2 par l'intermédiaire de boulons 14, une vis 14a et un écrou 14b dans le mode de réalisation représenté.

Il est bien entendu que l'invention n'est pas limitée à cet égard, et que tout moyen de fixation de type agrafe, rivet ou équivalent est envisagé dans le cadre de la présente invention.

Le dispositif d'absorption de choc supérieur 5b est identique au dispositif d'absorption de choc supérieur 5a, sa description ne sera donc pas reprise en détail aussi, sa description s'obtenant en remplaçant l'indice « a » des chiffres de référence du dispositif d'absorption de choc supérieur 5a par l'indice « b ».

Le dispositif d'absorption de choc inférieur 2c comprend un longeron 9a à l'intérieur duquel coulisse un profilé 10a de section ayant la même forme que le longeron 9a mais de plus petites dimensions, afin que le profilé 10a soit apte à coulisser dans le longeron 9a.

L'extrémité du profilé 10a à l'opposé du longeron 9a porte une barre 12, dont le rôle sera décrit plus en détail ci-après, fixée à l'extrémité du profilé 10a à l'opposé du longeron 9a par l'intermédiaire d'une plaque 18, la barre 12 étant fixée sur la plaque 18 par l'intermédiaire de vis 17.

Comme pour le dispositif d'absorption de choc supérieur, le profilé 10a est fixé au longeron 9a par des boulons 14, constitués chacun par une vis 14a et un écrou 14b.

Le dispositif d'absorption de choc inférieur 2d est identique au dispositif d'absorption de choc inférieur 9a, sa description ne sera donc pas reprise en détail aussi, sa description s'obtenant en remplaçant l'indice « a » des chiffres de référence du dispositif d'absorption de choc inférieur 9a par l'indice « b ».

On peut constater que les barres 11 et 12, reliant respectivement les extrémités des dispositifs d'absorption de choc supérieurs 2a, 2b, et les dispositifs d'absorption de choc inférieurs 2c, 2d servent à solidariser les deux dispositifs d'absorption de choc, lesdites barres pouvant porter une structure type pare-choc ou autre, et permettant de répartir le choc sur les deux dispositifs d'absorption de choc droit et gauche.

Il est bien entendu que l'invention n'est pas limitée à cet égard et que la présence des barres 11 et/ou 12 est facultative.

De même, l'invention n'est pas limitée à la structure particulière décrite de l'ensemble 1.

Une structure d'absorption de choc selon l'invention pourrait comprendre uniquement un dispositif d'absorption de choc inférieur, uniquement un dispositif d'absorption de choc supérieur, un ensemble dispositif d'absorption de choc supérieur et dispositif d'absorption de choc inférieur, ou deux ensembles de dispositifs d'absorption de choc mais agencés différemment, par exemple avec un pont de structure différente reliant les dispositifs d'absorption de choc entre eux, ou les dispositifs d'absorption de choc supérieurs moins espacés que les dispositifs d'absorption de choc inférieurs, et/ou les dispositifs d'absorption de choc supérieurs moins en saillie que les dispositifs d'absorption de choc inférieurs.

L'homme du métier saura adapter la structure de l'ensemble, le nombre de dispositifs d'absorption de choc et leurs positions relatives en fonction des chocs à absorber.

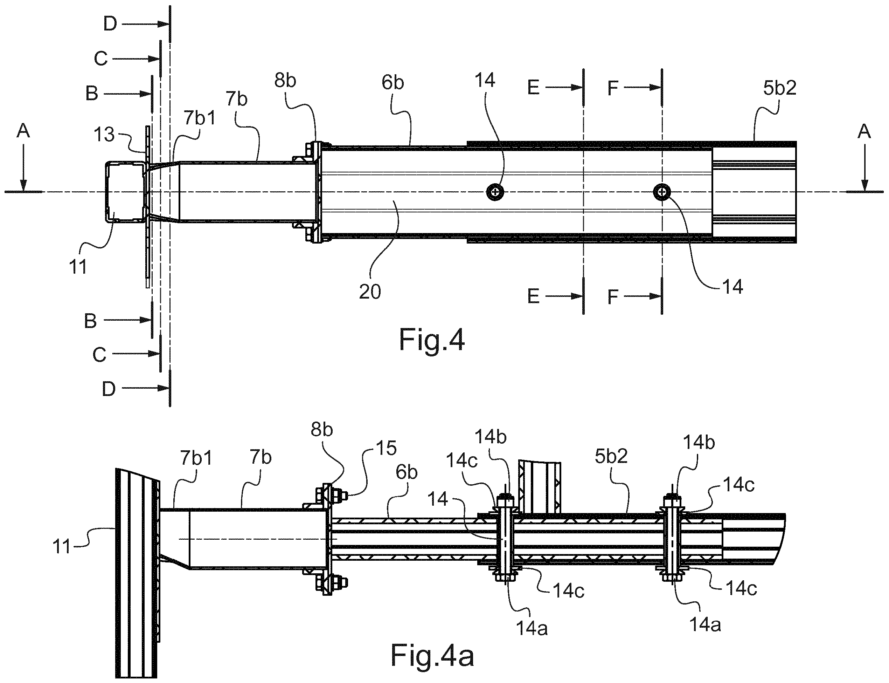

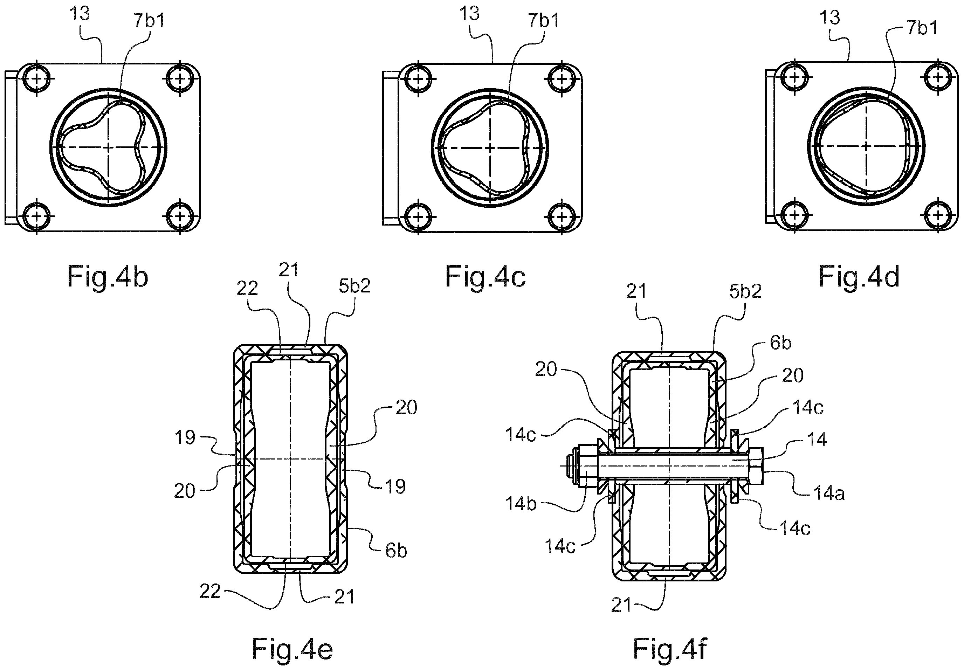

Si l'on se réfère plus particulièrement aux Figures 4 à 4f, on peut voir que l'on a détaillé le dispositif d'absorption de choc supérieur.

Les Figures 4b à 4d représentent différents plans de coupe de la partie d'extrémité 7b1 du tube préformé d'absorption par écrasement en spires 7b, de la partie la plus proche de la plaque 13 reliant l'extrémité du tube 7b à la barre 11 pour la Figure 4b à la partie la plus proche de la plaque carrée 8b pour la Figure 4d.

Le tube 7b comprend une partie de section constante reliée à la plaque carrée 8b, et une partie 7b1 à section s'évasant de la plaque 13 à la partie à section constante 7b.

La partie du tube 7b la plus proche de la plaque 13 a une forme de trèfle à trois feuilles en coupe transversale, comme représenté sur la Figure 4b.

En s'éloignant de la plaque 13, la forme de trèfle à trois feuilles en coupe transversale du tube 7b1 est de moins en moins marquée, comme représenté sur les Figures 4c et 4d, la forme du tube 7b1 en coupe transversale sur la Figure 4d, la plus proche de la partie 7b du tube à section constante, ayant la forme de trois arcs de cercle d'un même cercle, équidistants et reliés par des cordes ou la forme d'un triangle équilatéral à angle arrondis.

Cette forme permet un écrasement en spires du tube 7b par son extrémité libre 7b1 qui constitue l'extrémité d'absorption de choc, la résistance au choc du tube préformé d'absorption par écrasement en spires 7b étant inférieure à celle de l'organe d'absorption de choc 6b, comme expliqué plus haut.

Des boulons 14 solidarisent la partie horizontale 5b2 au profilé 6b. Sur l'exemple représenté, seuls deux boulons 14 solidarisent la partie horizontale 5b2 au profilé 6b, l'invention n'est cependant pas limitée à cet égard et l'homme du métier saura adapter le nombre de boulons 14 et leur disposition en fonction de la longueur des dispositifs d'absorption de choc et de la résistance au choc recherchée.

Des rondelles 14c peuvent être prévues entre les boulons 14 et la partie horizontale 5b2.

Si l'on se réfère maintenant aux Figures 4e et 4f, on peut voir que l'on a représenté la forme des profilés selon les deux plans de coupe E-E et F-F de la Figure 4.

On peut voir que les profilés formant la partie horizontale 5b2 et le profilé 6b sont des profilés de forme rectangulaire en coupe transversale, creux, le profilé 6b ayant des dimensions adaptées pour coulisser dans le profilé formant la partie horizontale 5b2, de préférence mais non exclusivement à ajustement serré.

Le profilé extérieur formant la partie horizontale 5b2 présente des creusures internes formant rainure 21 sur ses faces internes supérieures et inférieures, et des creusures 19 sur ces faces latérales externes, formant des zones de moindre épaisseur et donc de moindre résistance par rapport au reste du profilé, ces zones de moindre épaisseur formant des lignes de déchirement comme cela sera expliqué ci-après.

Le profilé intérieur 6b comprend également des creusures internes formant rainure 22 sur ses faces internes supérieures et inférieures et des parties renflées vers l'intérieur 20 sur ces faces latérales internes formant des zones de plus grande épaisseur et donc de plus grande résistance par rapport au reste du profilé.

En utilisation, les boulons 14 fixant les profilés intérieur et extérieur entre eux sont fixés sur les zones de moindre épaisseur pour le profilé extérieur et de plus grande épaisseur pour le profilé intérieur.

Le boulon 14 aura donc tendance à rester solidarisé sur le profilé de plus grande résistance, et si le choc est suffisant sur l'extrémité d'absorption de choc du profilé, le boulon 14 va déchirer le profilé extérieur selon la zone de moindre résistance, appelée également dans la présente demande ligne de déchirement.

Le choc va être absorbé dans le déchirement du profilé, l'avantage étant que le profilé interne va rester guidé par le profilé externe.

Le tube préformé d'absorption par écrasement en spires 7b qui peut être mis en amont du profilé interne permet d'absorber des chocs de moindre intensité, constituant avec l'organe d'absorption de choc constitué par la partie horizontale 5b2 et le profilé 6b un dispositif d'absorption de choc à plusieurs paliers de choc, le tube préformé d'absorption par écrasement en spires 7b absorbant des chocs jusqu'à un certain seuil, l'organe d'absorption de choc constitué par la partie horizontale 5b2 et le profilé 6b absorbant des chocs au-dessus du seuil.

Comme représenté sur la Figure 1, on peut coupler plusieurs dispositifs d'absorption de choc en parallèle, sur un même plan, ou selon des plans décalés verticalement et/ou horizontalement, pour absorber des chocs de plus grande ampleur.

Il est à noter que l'invention n'est pas limitée au mode de réalisation représenté, la forme des profilés pouvant varier (rectangulaire, carré, profilé à profil fermé ou ouvert en forme de U avec des bords rentrant des branches du U pour autoriser un guidage d'un profilé dans l'autre), et que les lignes de déchirement peuvent se trouver sur le profilé interne comme sur le profilé externe.

Il est également à noter que le profilé ne portant pas les zones de moindre épaisseur ne porte pas nécessairement des zones de plus grande épaisseur en regard. L'homme du métier saura ajuster les épaisseurs relatives des profilés pour obtenir le résultat d'un déchirement d'un des profilés par l'autre portant des moyens de fixation qui lui restent solidaires.

## Revendications

1. Organe d'absorption de choc comprenant un profilé guidant (5a2 ; 5b2 ; 9a ; 9b), un profilé guidé (6a ; 6b ; 10a ; 10b) apte à coulisser sur le profilé guidant (5a2 ; 5b2 ; 9a ; 9b), le profilé guidant (5a2 ; 5b2 ; 9a ; 9b) portant des moyens de guidage pour amener le profilé guidé (6a ; 6b ; 10a ; 10b) à coulisser par rapport au profilé guidant (5a2 ; 5b2 ; 9a ; 9b) selon leur direction longitudinale commune, le profilé guidé (6a ; 6b ; 10a ; 10b) étant fixé au profilé guidant (5a2 ; 5b2 ; 9a ; 9b) par des moyens de fixation (14), le profilé guidé (6a ; 6b ; 10a ; 10b) faisant saillie du profilé guidant (5a2 ; 5b2 ; 9a ; 9b) par une extrémité libre d'absorption de choc, les moyens de fixation (14) étant positionnés sur les profilés guidé (6a ; 6b ; 10a ; 10b) et guidant (5a2 ; 5b2 ; 9a ; 9b) selon au moins une ligne de déchirement s'étendant selon la direction longitudinale commune des profilés, de telle sorte que, pour chaque ligne de déchirement, l'un du profilé guidant (5a2 ; 5b2 ; 9a ; 9b) et du profilé guidé (6a ; 6b ; 10a ; 10b) comprend une surface de moindre résistance au cisaillement (19) s'étendant selon la direction longitudinale des profilés, la surface de moindre résistance au cisaillement (19) ayant une résistance au cisaillement inférieure à celle des autres surfaces du profilé qui ne sont pas sur la ligne de déchirement et étant configurée pour se déchirer selon la direction longitudinale des profilés sous l'action des moyens de fixation (14) lorsqu'une force supérieure à un seuil s'exerce sur l'extrémité d'absorption de choc du profilé guidé (6a ; 6b ; 10a ; 10b),
l'organe d'absorption de choc étant **caractérisé par** le fait chaque surface de moindre résistance au cisaillement (19) est portée par l'un du profilé guidant (5a2 ; 5b2 ; 9a ; 9b) et du profilé guidé (6a ; 6b ; 10a ; 10b), l'autre du profilé guidant (5a2 ; 5b2 ; 9a ; 9b) et du profilé guidé (6a ; 6b ; 10a ; 10b) présentant en regard, selon chaque ligne de déchirement, une surface renforcée (20), de résistance au cisaillement supérieure à la résistance au cisaillement des autres surfaces de ce profilé qui ne sont pas sur la ligne de déchirement.

2. Organe d'absorption de choc selon la revendication 1, **caractérisé par le fait que** l'un du profilé guidant (5a2 ; 5b2 ; 9a ; 9b) et du profilé guidé (6a ; 6b ; 10a ; 10b) porte les surfaces de moindre résistance au cisaillement (19) selon chacune des lignes de déchirement.

3. Organe d'absorption de choc selon l'une des revendications 1 et 2, **caractérisé par le fait que** l'un du profilé guidant (5a2 ; 5b2 ; 9a ; 9b) et du profilé guidé (6a ; 6b ; 10a ; 10b) porte les surfaces de moindre résistance au cisaillement (19) selon chacune des lignes de déchirement, l'autre du profilé guidant (5a2 ; 5b2 ; 9a ; 9b) et du profilé guidé (6a ; 6b ; 10a ; 10b) présentant en regard, selon chaque ligne de déchirement, une surface renforcée (20), de résistance au cisaillement supérieure à la résistance au cisaillement des autres surfaces de ce profilé qui ne sont pas sur la ligne de déchirement.

4. Organe d'absorption de choc selon l'une des revendications 1 à 3, **caractérisé par le fait que** les moyens de fixation (14) sont choisis parmi des vis, des boulons traversants, des goujons, des rivets, des agrafes.

5. Organe d'absorption de choc selon l'une des revendications 1 à 4, **caractérisé par le fait que** les surfaces de moindre résistance au cisaillement (19) sont constituées par des surfaces de moindre épaisseur par rapport aux surfaces qui ne sont pas situées sur les lignes de déchirement.

6. Organe d'absorption de choc selon l'une des revendications 1 et 3, **caractérisé par le fait que** les surfaces renforcées (20) sont constituées par des surfaces de plus forte épaisseur.

7. Organe d'absorption de choc selon la revendication 5, **caractérisé par le fait que** les surfaces de moindre épaisseur (19) sont constituées par des creusures.

8. Organe d'absorption de choc selon la revendication 7 prise en dépendance de l'une des revendications 1 et 3, **caractérisé par le fait que** les surfaces renforcées (20) sont constituées par des bourrelets de forme complémentaire aux creusures des zones de moindre épaisseur (19) du profilé en regard.

9. Organe d'absorption de choc selon l'une des revendications 1 à 8, **caractérisé par le fait que** le profilé guidé (6a ; 6b ; 10a ; 10b) et le profilé guidant (5a2 ; 5b2 ; 9a ; 9b) ont une forme en coupe transversale choisie parmi un carré, un rectangle, un ovale, un cercle, une forme en U avec un retour en équerre des branches du U l'une vers l'autre.

10. Organe d'absorption de choc selon l'une des revendications 1 à 9, **caractérisé par le fait que** le profilé guidé (6a ; 6b ; 10a ; 10b) et le profilé guidant (5a2 ; 5b2 ; 9a ; 9b) sont constitués d'un matériau choisi parmi un métal, une matière plastique, un matériau composite.

11. Organe d'absorption de choc selon l'une des revendications 1 à 10, **caractérisé par le fait que** le profilé guidé (6a ; 6b ; 10a ; 10b) et le profilé guidant (5a2 ; 5b2 ; 9a ; 9b) sont constitués du même matériau.

12. Organe d'absorption de choc selon l'une des revendications 1 à 11, **caractérisé par le fait que** le profilé guidant (5a2 ; 5b2 ; 9a ; 9b) et le profilé guidé (6a ; 6b ; 10a ; 10b) sont creux, le profilé guidé (6a ; 6b ; 10a ; 10b) coulissant dans le profilé guidant (5a2 ; 5b2 ; 9a ; 9b), le profil interne du profilé guidant (5a2 ; 5b2 ; 9a ; 9b) constituant les moyens de guidage.

13. Dispositif d'absorption de choc **caractérisé par le fait qu'**il comprend un organe d'absorption de choc selon l'une des revendications 1 à 12, sur l'extrémité d'absorption de choc duquel est monté un tube préformé d'absorption par écrasement en spires (7a ; 7b) dont l'extrémité libre constitue l'extrémité d'absorption de choc du dispositif, la résistance au choc du tube préformé d'absorption par écrasement en spires (7a ; 7b) étant inférieure à celle de l'organe d'absorption de choc.

14. Système d'absorption de choc, **caractérisé par le fait qu'**il comprend un châssis solidarisant un longeron primaire (5a ; 5b) et un longeron secondaire (9a ; 9b), le longeron primaire (5a ; 5b) étant en saillie du longeron secondaire (9a ; 9b) suivant la direction longitudinale commune des longerons et parallèle à celui-ci, de telle sorte que l'extrémité libre du longeron primaire (5a ; 5b) est en saillie de l'extrémité libre du longeron secondaire (9a ; 9b), chaque longeron étant constitué par un organe d'absorption de choc selon l'une des revendications 1 à 12.

15. Système d'absorption de choc, **caractérisé par le fait qu'**il comprend un châssis solidarisant un longeron primaire (5a ; 5b) et un longeron secondaire (9a ; 9b), le longeron primaire (5a ; 5b) étant en saillie du longeron secondaire (9a ; 9b) suivant la direction longitudinale commune des longerons et parallèle à celui-ci, de telle sorte que l'extrémité libre du longeron primaire (5a ; 5b) est en saillie de l'extrémité libre du longeron secondaire (9a ; 9b), le longeron primaire (5a ; 5b) étant constitué par un dispositif d'absorption de choc selon la revendication 13 et le longeron secondaire étant constitué par un organe d'absorption de choc selon l'une des revendications 1 à 12.

16. Ensemble d'absorption de choc (1), **caractérisé par le fait qu'**il comprend plusieurs systèmes d'absorption de choc selon la revendication 14 ou la revendication 15 solidarisés entre eux, les extrémités d'absorption de choc de chacun des longerons primaires (5a ; 5b) appartenant à un même plan primaire, les extrémités d'absorption de choc de chacun des longerons secondaires (9a ; 9b) appartenant à un même plan secondaire, les extrémités d'absorption de choc dans un même plan étant facultativement solidarisées entre elles.
